# EUROPÄISCHE PATENTSCHRIFT

(11) **EP 3 752 406 B1**
(45) Veröffentlichungstag und Bekanntmachung des Hinweises auf die Patenterteilung: **29.06.2022**
(21) Anmeldenummer: 19704587.5
(22) Anmeldetag: 07.02.2019
(51) Int. Cl.: B62D 1/181, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 13.02.2018 DE 102018202157
(43) Veröffentlichungstag der Anmeldung: 23.12.2020
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2019/052984
(87) Internationale Veröffentlichungsnummer: WO 2019/158424

(56) Entgegenhaltungen:
- JP-A- H05 105 087

## Beschreibung

### Stand der Technik

Die Erfindung betrifft einen Verstellantrieb für eine motorisch verstellbare Lenksäule für ein Kraftfahrzeug, umfassend einen Spindeltrieb mit einer Gewindespindel, die in eine Spindelmutter eingreift, die mit der Rotorwelle eines einen Rotor und einen Stator aufweisenden Antriebsmotors um die Spindelachse relativ zur Gewindespindel drehend antreibbar gekuppelt ist. Weiterhin betrifft die Erfindung eine motorisch verstellbare Lenksäule für ein Kraftfahrzeug, umfassend einen derartigen Verstellantrieb, dessen Spindeltrieb zwischen einer mit der Karosserie verbindbaren Trageinheit und einer eine Lenkspindel drehbar aufnehmenden Manteleinheit und/oder zwischen axial relativ zueinander teleskopartig verstellbaren, die Lenkspindel lagernden Mantelrohren einer Manteleinheit angeordnet ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einem Mantelrohr einer Stelleinheit drehbar gelagert, die von einer Trageinheit an der Fahrzeugkarosserie gehalten ist. Dadurch, dass die Stelleinheit zumindest ein Mantelrohr aufweist, welches in einer mit der Trageinheit verbundenen Manteleinheit, auch als Führungskasten oder Kastenschwinge bezeichnet, in Richtung der Längsachse teleskopartig verschiebbar ist, kann eine Längsverstellung des Lenkrads relativ zur Karosserie erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Bei motorisch verstellbaren Lenksäulen ist es bekannt, zur Verstellung einen motorischen Verstellantrieb mit einer Antriebseinheit vorzusehen, die einen elektrischen Antriebsmotor umfasst, der einen Spindeltrieb mit einer in eine Spindelmutter eingeschraubten Gewindespindel antreibt. Durch die Antriebseinheit sind die Gewindespindel und die Spindelmutter gegeneinander um die Gewindespindelachse, oder kurz Spindelachse, drehend antreibbar, wodurch die Gewindespindel und die Spindelmutter je nach Drehrichtung in Richtung der Gewindespindelachse translatorisch aufeinander zu oder voneinander weg bewegt werden können. Die Gewindespindel und die Spindelmutter sind an relativ zueinander verstellbaren Teilen der Lenksäule, beispielsweise an einer Manteleinheit und einer Trageinheit, oder an in Achsrichtung teleskopierbaren Mantelrohren einer Manteleinheit, in Richtung der Spindelachse abgestützt.

In einer als Tauchspindelantrieb bekannten Ausführungsform ist die Gewindespindel bezüglich Drehung um die Spindelachse mit einem feststehenden Teil der Lenksäule, beispielsweise der Trageinheit, der Manteleinheit oder einem Mantelrohr, unverdrehbar gekoppelt und die Spindelmutter ist drehend antreibbar, aber in Richtung der Spindelachse einem relativ dazu verstellbaren Teil der Lenksäule abgestützt. Durch drehenden Antrieb der Spindelmutter kann eine translatorische Bewegung relativ zur Gewindespindel bewirkt werden, wodurch die über den Spindeltrieb verbundenen Teile der Lenksäule relativ zueinander verstellt werden können. Eine Lenksäule mit einem derartigen Verstellantrieb ist beispielsweise in der DE 10 2017 207 561 A1, auf welcher der Oberbegriff des unabhängigen Anspruchs beruht, oder der JP H05 105087 A beschrieben.

Bei der Antriebseinheit der bekannten Lenksäule ist die Rotorwelle des Antriebsmotors, die koaxial mit dem Rotor verbunden ist und auch als Motorwelle bezeichnet wird, über ein Getriebe mit der Spindelmutter gekuppelt. Beispielsweise weist die Rotorwelle eine Schnecke auf, die in ein mit der Spindelmutter verbundenes Schneckenrad eines Schneckengetriebes eingreift. Derartige bekannte Bauformen von Antriebseinheiten sind zwar zuverlässig, erfordern jedoch einen relativ hohen Fertigungs- und Montageaufwand. Außerdem ist der Bauraumbedarf hoch, und kann allenfalls mit hohem zusätzlichem Aufwand an beengte Bauraumverhältnisse im Fahrzeug angepasst werden.

Angesichts der vorangehend erläuterten Problematik ist es eine Aufgabe der vorliegenden Erfindung, einen motorischen Verstellantrieb zur Verfügung zu stellen, der einen geringeren Aufwand erfordert und einfacher kompakt gestaltet werden kann, sowie eine Lenksäule in kompakter Bauweise.

### Darstellung der Erfindung

Diese Aufgabe wird erfindungsgemäß gelöst durch einen Verstellantrieb mit den Merkmalen des Anspruchs 1 und eine Lenksäule mit den Merkmalen des Anspruchs 12. Vorteilhafte Weiterbildungen ergeben sich aus den Unteransprüchen.

Erfindungsgemäß wird für einen Verstellantrieb mit den eingangs genannten Merkmalen vorgeschlagen, dass die Rotorwelle des Antriebsmotors als koaxial zur Spindelachse angeordnete Hohlwelle ausgebildet ist, in der koaxial die Gewindespindel angeordnet ist.

Erfindungsgemäß ist der Antriebsmotor als Hohlwellenmotor ausgebildet, dessen Motorwelle, die durch die fest koaxial mit dem Rotor verbundene Rotorwelle gebildet wird, eine im Wesentlichen rohrförmige Hohlwelle ist. Die Hohlwelle weist eine axial, in Richtung der Spindelachse zumindest teilweise über die axiale Länge des Rotors durchgehende Durchgangsöffnung auf. Die Spindelmutter ist koaxial mit der Hohlwelle verbunden, so dass die Gewindeöffnung mit der Durchgangsöffnung fluchtet, und die darin eingreifende Gewindespindel zumindest abschnittweise zentral durch die Rotorwelle verläuft. Dadurch, dass die Gewindespindel zumindest teilweise - abhängig von der Verstellposition des Spindeltriebs - in Richtung der Spindelachse in die Rotorwelle eintaucht und dort vom Rotor umschlossen wird, der seinerseits koaxial innerhalb des Stators drehend antreibbar aufgenommen ist, kann ein besonders kompakter Aufbau des Spindeltriebs samt motorischer Antriebseinheit realisiert werden. Im Stand der Technik ist dies durch die parallel mit Abstand oder quer zueinander stehenden Getriebeachsen nicht oder nur mit hohem Aufwand realisierbar.

Die Spindelmutter kann bevorzugt direkt, ohne Zwischenschaltung zusätzlicher Getriebeglieder drehfest mit der Rotorwelle verbunden sein. Durch einen derartigen Direktantrieb, bei dem die Spindelmutter sich mit der Drehzahl des Rotors dreht, ergibt sich zum einen ein einfacher Aufbau mit geringem Herstellungs- und Montageaufwand, und zum anderen kann der erforderliche Bauraum, der überwiegend durch den die Gewindespindel koaxial umgebenden Stator des Antriebsmotors beansprucht wird, in vorteilhafter Weise reduziert werden.

Bevorzugt kann die Spindelmutter in einer axialen Durchgangsöffnung der Hohlwelle aufgenommen sein. Dadurch ist es möglich, die Spindelmutter mit dem Spindelgewinde in Richtung der Spindelachse innerhalb der Längserstreckung innerhalb der Rotorwelle dem Rotor zu positionieren, was einer kompakten Bauweise zugutekommt.

Es ist grundsätzlich denkbar, die Spindelmutter einstückig mit der Rotorwelle auszubilden, so dass das Spindelgewinde unmittelbar in den Innenumfang der Durchgangsöffnung eingeformt ist.

Eine vorteilhafte Weiterbildung ist, dass die Spindelmutter eine kraftschlüssige und/oder formschlüssige und/oder stoffschlüssige Verbindung mit der Hohlwelle aufweist. Die Verbindung der Spindelmutter mit der Rotorwelle umfasst dabei eine Translations- oder Längsverbindung, die erforderlich ist zur Ausübung und Übertragung der Verstellkraft von der Gewindespindel über die Spindelmutter in Richtung der Spindelachse, und eine Rotations- oder Drehverbindung, die zur Übertragung des Motormoments von der Rotorwelle auf die Spindelmutter dient. Die Translations- und die Rotationsverbindung können in der Praxis in einer einzigen Verbindung mit unterschiedlichen Halteeigenschaften in Längs- und Drehrichtung ausgestaltet sein, um erweiterte funktionale Eigenschaften im Zusammenwirken von Spindelmutter und Rotorwelle zu bewirken, wie nachfolgend noch erläutert wird.

Es ist beispielsweise möglich, die Spindelmutter außen zylindrisch, und die Rotorwelle mit angepassten Maßen innen zylindrisch auszubilden, so dass die Spindelmutter kraftschlüssig in die Durchgangsöffnung axial, d.h. in Richtung der Spindelachse, in die Hohlwelle eingepresst werden kann, was eine rationelle Fertigung und eine freie axiale und rotatorische Positionierbarkeit ermöglicht. Durch die Ausgestaltung der reibschlüssigen Fixierung kann ein maximales Durchdreh-Motormoment vorgegeben werden, beispielsweise zum Schutz gegen Überlastung. Alternativ kann die Durchgangsöffnung einen unrunden oder prismatischen Querschnitt haben, zur formschlüssigen Übertragung der Rotordrehung auf die Gewindespindel. Unabhängig davon kann die Translationsverbindung reibschlüssig ausgestaltet sein, d.h. als in Richtung der Spindelachse wirksamer Reib- bzw. Kraftschluss, um die maximal in Richtung der Spindelachse ausübbare Verstellkraft zu begrenzen. Alternativ oder zusätzlich können auch bei der Translationsverbindung in Achsrichtung wirksame Formschlusselemente vorgesehen sein, beispielsweise zur Bildung von in Richtung der Spindelachse wirksamen Begrenzungen, Anschlägen oder dergleichen. Alternativ oder zusätzlich können jeweils stoffschlüssige Verbindungen wie Kleben oder Schweißen vorgesehen sein, um eine nachgiebige oder auch starr-unlösbare Fixierung zu erreichen.

Die Verbindung kann zumindest auf einem Teilabschnitt des Außenumfangs der Spindelmutter ausgebildet sein. Hierzu können miteinander korrespondierende Reib- oder Formschlusselemente außen auf der Spindelmutter und innen in der Rotorwelle vorgesehen sein, welche es beispielsweise ermöglichen, die Spindelmutter vollständig innerhalb der Rotorwelle unterzubringen und zu fixieren.

Eine vorteilhafte Ausführung sieht vor, dass die Verbindung beim Überschreiten einer vorgegebenen axial in Richtung der Spindelachse auf die Spindelmutter relativ zur Hohlwelle wirkenden Grenzkraft losbrechbar ausgestaltet ist. Die Grenzkraft definiert einen Schwellenwert der von der Gewindespindel auf die Spindelmutter übertragenen Kraft, bei dessen Überschreiten die Verstell- und Haltefunktion des Spindeltriebs außer Kraft gesetzt wird, und Gewindespindel und die Spindelmutter sich ohne relative Drehung in axialer Richtung (der Spindelachse) relativ zur Hohlwelle bewegen kann, mit anderen Worten der Spindeltrieb unabhängig vom anliegenden Antriebsmoment des Antriebsmotors zusammengeschoben werden kann. Dadurch dient der Spindeltrieb als Sollbrucheinrichtung, welche es ermöglicht, dass die Lenksäule im Crashfall, beispielsweise bei einem Frontalzusammenstoß des Kraftfahrzeugs, wenn ein Körper mit derart hoher kinetischer Energie auf das Lenkrad aufprallt, dass durch Überschreiten der Grenzkraft auf die Lenkspindel die Haltewirkung der Verbindung überwunden wird, und die Lenksäule in Längsrichtung und gegebenenfalls in Höhenrichtung relativ zur Karosserie kollabiert. Dadurch kann das Lenkrad in der oder den Verstellrichtungen ausweichen, wodurch das Verletzungsrisiko der Fahrzeuginsassen reduziert werden kann. Die Sollbruchcharakteristik kann beispielsweise durch ein zwischen Spindelmutter und Hohlwelle angeordnetes Sollbruchelement vorgegeben werden, welches bei einer axialen Relativbewegung, welche nicht durch den Spindelantrieb erzeugt wird, bricht, oder auch eine Kraft- oder Reibschlussverbindung, welche sich beim Überschreiten einer vorgegebenen Grenzkraft löst. In einer besonders vorteilhaften Weiterbildung kann das Sollbruchelement als Scherstift ausgebildet sein, der bevorzugt in einer radialen Ausnehmung der Spindelmutter und einer dazu fluchtenden radialen Ausnehmung der Hohlwelle angeordnet ist.

Eine vorteilhafte Ausführung der Erfindung sieht vor, dass zwischen der Spindelmutter und der Hohlwelle eine Energieabsorptionseinrichtung ausgebildet ist. Die Energieabsorptionseinrichtung, auch Crasheinrichtung genannt, ist mit der Spindelmutter und mit der Hohlwelle derart wirkverbunden, dass sie die im Crashfall in einen Verstellantrieb eingeleitete kinetische Energie absorbiert, d.h. in Wärme und/oder Verformungsarbeit umwandelt und die Relativbewegung von Spindelmutter und Hohlwelle dämpft. Ein auf die über die Verstelleinrichtungen miteinander gekoppelten Komponenten der Lenksäule aufprallender Körper wird dadurch definiert abbremst, wodurch das Verletzungsrisiko verringert und das Sicherheitsniveau erhöht wird.

Erfindungsgemäß kann eine kontrollierte Energieabsorption besonders günstig dadurch realisiert werden, dass die Energieabsorptionseinrichtung eine mit der Spindelmutter und der Hohlwelle zusammenwirkende Friktionseinrichtung und/oder Deformationseinrichtung aufweist. Konkret kann eine Friktionseinrichtung dadurch bereitgestellt werden, dass im Crashfall die Spindelmutter in dem Durchgangsquerschnitt der Hohlwelle durch die einwirkende kinetische Energie in Richtung der Spindelachse entlangbewegt wird, wobei durch dabei auftretende Reibung an einer Kontaktfläche zwischen der Spindelmutter und der Innenwandung der Durchgangsöffnung Energie absorbiert wird, beispielsweise an den in einer Presspassung der Spindelmutter kraftschlüssig gegeneinander anliegenden Umfangsflächen. Dabei kann die Höhe der wirkenden Reibungskraft durch die in der Presspassung radial wirkende Kontaktkraft eingestellt werden, und/oder die Gestaltung der aneinander anliegenden Kontaktflächen, beispielsweise deren Rauigkeit, und/oder die Materialpaarung von Spindelmutter und Hohlwelle. Es ist dabei möglich, die Reibungskraft über die Länge des möglichen Bewegungswegs der Spindelmutter, entlang dem die Spindelmutter im Crashfall von der Gewindespindel in der Hohlwelle axial verschoben wird und der als Energieabsorptionsweg oder Crashweg bezeichnet werden kann, in der Hohlwelle abschnittsweise unterschiedlich vorzugeben, beispielsweise um eine progressiv ansteigende Reibungskraft über den Energieabsorptionsweg der Spindelmutter in der Hohlwelle in Richtung der Spindelachse, zu realisieren, beispielsweise durch eine Verengung des offenen Durchgangsquerschnitts der Hohlwelle, und/oder ein Erhöhung der Rauigkeit. Derartige Maßnahmen können einen Anstieg der wirkenden Reibungskraft bei einer Bewegung entlang des Energieabsorptionswegs bewirken.

Alternativ oder zusätzlich können Deformationselemente an der Spindelmutter, bevorzugt an ihrem Außenumfang, und/oder an der Hohlwelle, bevorzugt auf ihrem Innenumfang in dem Energieabsorptionsweg nach innen vorstehend, angeordnet oder ausgebildet sein. Beispielsweise kann ein oder mehrere innen in der Hohlwelle angeordnete Deformationselemente eine energieaufzehrende plastische Deformation der Spindelmutter bewirken, wenn diese im Crashfall in Richtung der Spindelachse daran vorbeigezwängt wird. Deformationselemente können beispielsweise durch eine Querschnittsverengung und/oder -veränderung der Durchgangsöffnung realisiert werden, und oder Vorsprünge oder dergleichen, die sich bei einer Relativbewegung in die Spindelmutter eingraben oder -quetschen.

Die Deformationseinrichtung kann mindestens ein Deformationselement aufweisen, welches in der Durchgangsöffnung der Hohlwelle angeordnet ist und von dem die Spindelmutter bei einer axialen Bewegung relativ zur Hohlwelle plastisch deformierbar ist. Das Deformationselement einen über den Innenumfang durchgehend umlaufenden oder abschnittweise ausgebildeten Vorsprung aufweisen, der in den Bewegungsweg der Spindelmutter im Crashfall vorsteht. Alternativ oder zusätzlich kann ein Deformationselement an der Hohlwelle von der Spindelmutter deformierbar ausgestaltet sein.

Vorteilhaft bei der Erfindung ist, dass die Energieabsorptionseinrichtung einfach durch eine entsprechende Ausgestaltung der Spindelmutter und der Hohlwelle realisierbar ist, beispielsweise durch eine in der Fertigung leicht beherrschbare Anpassung der relativen Abmessungen, und/oder eine bevorzugt einstückige An- oder Einformung von Deformationselementen.

Dadurch kann eine Zusatzfunktion zur Energieabsorption mit geringem Aufwand ohne zusätzliche Bauteile in den Spindeltrieb integriert werden. Weiterhin ist vorteilhaft, dass eine Integration der Energieabsorptionselemente in die Durchgangsöffnung der Hohlwelle keinen zusätzlichen Bauraum erfordert, wodurch die angestrebte kompakte Bauweise des erfindungsgemäßen Direktantriebs einfach optimierbar ist. Außerdem sind die Energieabsorptionselemente in der Hohlwelle gegen potentiell schädliche äußere Einflüsse geschützt, wodurch die Funktionssicherheit erhöht wird.

Es kann vorgesehen sein, dass die Spindelmutter aus einem weicheren Material als die Hohlwelle ausgebildet ist. Dadurch kann erreicht werden, dass die Spindelmutter im Crashfall kontrolliert von deformiert wird, um eine reproduzierbare Energieabsorptionscharakteristik darzustellen. Außerdem können für die unterschiedlichen Funktionen optimierte Materialpaarungen eingesetzt werde, beispielsweise eine Spindelmutter aus Buntmetall oder Kunststoff, die leichtgängig und verschleißarm auf eine bevorzugt aus Stahl gefertigte Gewindespindel aufschraubbar ist, welche ihrerseits hinreichend starr und biegesteif zur Übertragung von axialen Kräften beim Verstellen und im Crashfall ist. Die Hohlwelle kann ebenfalls aus Stahl bestehen, so dass eine hohe Steifigkeit und Formstabilität gewährleistet ist, und durch daran angeformte Energieabsorptionselemente eine zuverlässige und kontrollierte Verformung der relativ dazu weicheren Spindelmutter erfolgen kann.

In einer vorteilhaften Weiterbildung kann es vorgesehen sein, dass die Spindelmutter aus Kunststoff ausgebildet ist, wobei die Spindelmutter mittels einer Spritzgussoperation direkt in die Hohlwelle eingebracht ist, d.h. im Spritzgussverfahren in die Hohlwelle eingespritzt wird. Bevorzugt weist die Hohlwelle dabei zumindest eine radiale Ausnehmung oder Einformung aus, in welche der Kunststoff während der Spritzgussoperation eindringen kann und somit ein Sollbruchelelement ausbildet, welches integral einstückig mit der Spindelmutter ausgebildet ist.

Der Antriebsmotor kann bevorzugt ein Motorgehäuse aufweisen, in dem die Hohlwelle gelagert ist. Das Motorgehäuse, auch Statorgehäuse genannt, nimmt den Stator auf und umgibt diesen zumindest teilweise. Weiterhin kann das Motorgehäuse ein oder bevorzugt zwei Lager zur drehbaren Lagerung der Hohlwelle aufweisen, welche als Gleit- oder bevorzugt als Wälzlager ausgebildet sein können. Zur Verbindung mit einer feststehenden oder relativ dazu verstellbaren Komponente der Lenksäule, wie Trageinheit, Manteleinheit, Mantelrohr oder dergleichen, kann das Motorgehäuse Befestigungsmittel aufweisen, beispielsweise Flanschbohrungen, Haltezapfen oder dergleichen.

Eine vorteilhafte Weiterbildung sieht vor, dass die Hohlwelle mindestens zwei axial beabstandete Lager aufweist, bevorzugt Wälzlager, bevorzugt in den Endbereichen der Hohlwelle. Besonders gut geeignet zur Aufnahme der auftretenden Lastmomente ist eine sogenannte "X-Lagerung". Dabei ist die Hohlwelle in zwei axial spiegelbildlich angeordneten Schrägwälzlagern beiderseits des Rotors gelagert, beispielsweise Schrägkugellagern. Die Lagerinnenringe sind mit der Hohlwelle verbunden, die Lageraußenringe beispielsweise im Motorgehäuse montiert. Die Verlängerungen gedachter Verbindungslinien durch die Wälzkörper-Kontaktflächen der Lagerinnen- und Lageraußenringe der beiden Lager schneiden sich dabei X-förmig auf der Spindelachse im Bereich der Hohlwelle zwischen den Lagern.

Alternativ kann es vorgesehen sein, dass die Hohlwelle durch ein einziges Lager gelagert ist, bevorzugt ein Vierpunktwälzlager, bevorzugt in einem der Endbereiche der Hohlwelle. Ein Vierpunktlager ist ein einreihiges Radial-Schrägkugellager, dessen Laufbahnen so ausgebildet sind, dass es neben radialen Belastungen auch Axialbelastungen in beiden Richtungen aufnehmen kann. Ein Vorteil dieser Ausführungsform ist, dass ein Vierpunktlager in axialer Richtung deutlich weniger Platz als zweireihige Lager beansprucht.

Bevorzugt ist der Antriebsmotor als Servomotor ausgebildet. Ein derartiger Servomotor kann bei einer kleinen Bauform ein hinreichend großes Antriebsmoment zur direkten Drehung der Spindelmutter zur Verstellung der Lenksäule abgeben, ist praktisch wartungsfrei und zuverlässig.

Eine erfindungsgemäße motorisch verstellbare Lenksäule für ein Kraftfahrzeug, umfasst einen Verstellantrieb mit einem oder mehreren der vorangehend beschriebenen Merkmale, dessen Spindeltrieb zwischen einer mit der Karosserie verbindbaren Trageinheit und einer eine Lenkspindel drehbar aufnehmenden Manteleinheit und/oder zwischen axial relativ zueinander teleskopartig verstellbaren, die Lenkspindel lagernden Mantelrohren einer Manteleinheit angeordnet ist. Ein Verstellantrieb kann zur Längenverstellung in Richtung der Längsachse der Lenkspindel eingesetzt werden, und auch zur Höhenverstellung der Manteleinheit relativ zur Trageinheit. Dank der erfindungsgemäß kompakten Bauform des erfindungsgemäßen Verstellantriebs kann eine ebenfalls kompakte Bauform der Lenksäule mit geringem Aufwand realisiert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: einen Längsschnitt entlang der Spindelachse des Verstellantriebs der Lenksäule gemäß Figur 1,
- Figur 4: eine vergrößerte Schnittansicht durch die Antriebseinheit eines Verstellantriebs aus Figur 3 in normaler Betriebsposition,
- Figur 5: der Verstellantrieb aus Figur 3 nach einem Crashfall,
- Figur 6: eine zweite Ausführungsform eines Verstellantriebs in einer Ansicht wie in Figur 4,
- Figur 7: einen Längsschnitt entlang der Spindelachse des Verstellantriebs in einer dritten Ausführungsform einer Lenksäule;
- Figur 8: einen Querschnitt A-A durch die Lenksäule gemäß Figur 7,
- Figur 9: eine schematische, teilweise aufgeschnittene perspektivische Detailansicht des Verstellantriebs
- Figur 10: ein Antriebsmotor in einer zweiten Ausführungsform, in einer Querschnittsansicht wie in Figur 8,
- Figur 11: eine auseinander gezogene perspektivische Ansicht des Antriebsmotors gemäß Figur 10.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

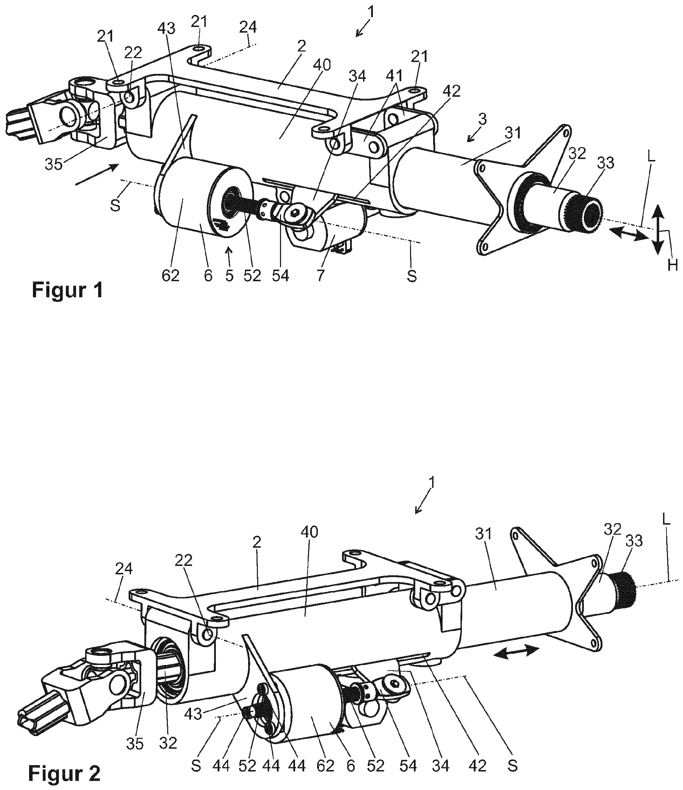

Figur 1 zeigt eine erfindungsgemäße Lenksäule 1 in einer schematischen perspektivischen Ansicht von schräg oben auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt eine Ansicht auf das vordere Ende.

Die Lenksäule 1 umfasst eine Trageinheit 2, welche als Konsole ausgebildet ist, die Befestigungsmittel 21 in Form von Befestigungsbohrungen aufweist zur Anbringung an einer nicht dargestellten Fahrzeug-Karosserie. Von der Trageinheit 2 wird eine Manteleinheit 4 gehalten, auch Führungskasten oder Kastenschwinge genannt, umfassend einen Außenmantel 40, auch als äußeres Mantelrohr 40 bezeichnet, in dem eine Stelleinheit 3 mit einem Innenmantel 31, auch als inneres Mantelrohr 31 bezeichnet, aufgenommen ist.

In dem Mantelrohr 31 ist eine Lenkspindel 32 um ihre Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist. Am vorderen Ende ist die Lenkspindel 32 mit einer Gabel 35 eines Universalgelenks drehmomentschlüssig verbunden.

Das innere Mantelrohr 31 der Stelleinheit 3 ist zur Realisierung einer Längsverstellung in dem äußeren Mantelrohr 40 der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist in ihrem vorderen Endbereich in einem Schwenklager 22 an der Trageinheit 2 um eine quer zur Längsachse L liegende, horizontale Schwenkachse 24 verschwenkbar gelagert. Im hinteren Bereich ist die Manteleinheit 4 über einen drehbaren Stellhebel 41 mit der Trageinheit 2 verbunden. Durch eine Drehbewegung des Stellhebels 41 kann die Manteleinheit 4 relativ zur Trageinheit 2 um die im Einbauzustand waagerecht liegende Schwenkachse 24 verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

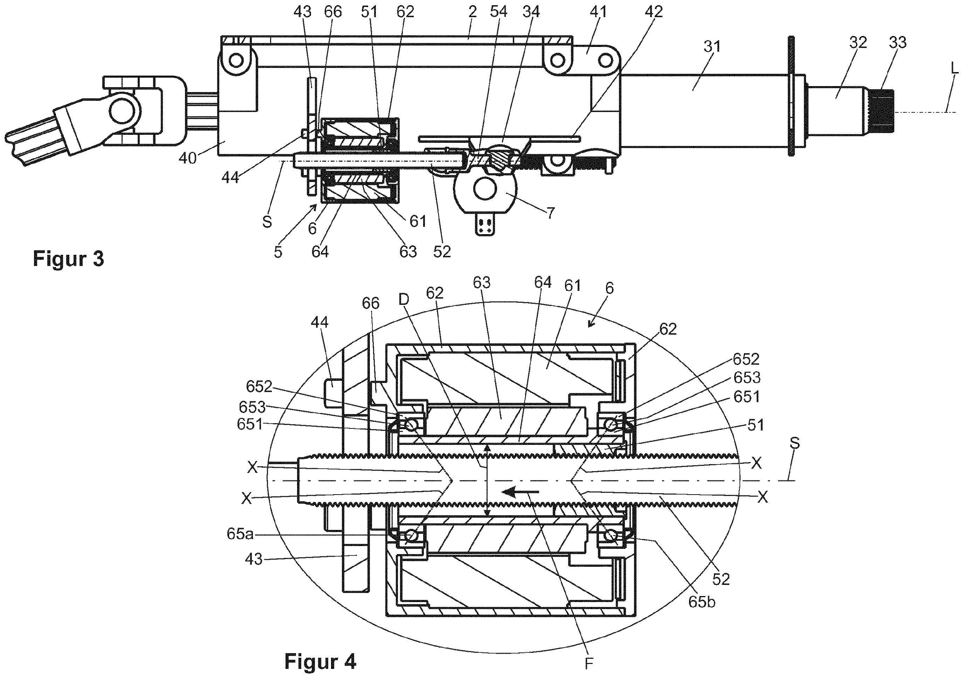

Ein erfindungsgemäßer Verstellantrieb 5 zur Längsverstellung der Stelleinheit 3 relativ zur Manteleinheit 4 in Richtung der Längsachse L weist einen Spindeltrieb mit einer Spindelmutter 51 mit einem Innengewinde auf, in die eine sich längs einer Spindelachse S erstreckende Gewindespindel 52 eingreift, also mit ihrem Außengewinde in die Spindelmutter 51 eingeschraubt ist. Diese Anordnung ist aus den Figuren 3 bis 6 gut erkennbar. Die Spindelachse S verläuft im Wesentlichen parallel zur Längsachse L.

Die Gewindespindel 52 ist mit einem an ihrem hinteren Ende ausgebildeten Befestigungselement 54 über ein Übertragungselement 34 mit dem inneren Mantelrohr 31 verbunden, und zwar fest in Richtung der Spindelachse S und auch feststehend bezüglich Drehung um die Spindelachse S. Durch die drehend antreibbare Spindelmutter 51, die in Richtung der Spindelachse S an dem äußeren Mantelrohr 40 abgestützt ist, und die bezüglich Drehung relativ dazu feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist eine Antriebseinheit mit einem elektrischen Antriebsmotor 6 auf, die detailliert in den Figuren 3 bis 6 dargestellt ist. Der Antriebsmotor 6 weist einen Stator 61 auf, der in einem Statorgehäuse 62 angeordnet ist. Ein Rotor 63, der eine Rotorwelle 64 aufweist, ist in dem Stator 61 um die Spindelachse S in Wälzlagern 65a, 65b drehbar gelagert, die in das Statorgehäuse 62 eingesetzt sind. Das Statorgehäuse 62 stützt sich in Richtung der Spindelachse S an dem äußeren Mantelrohr 40 ab.

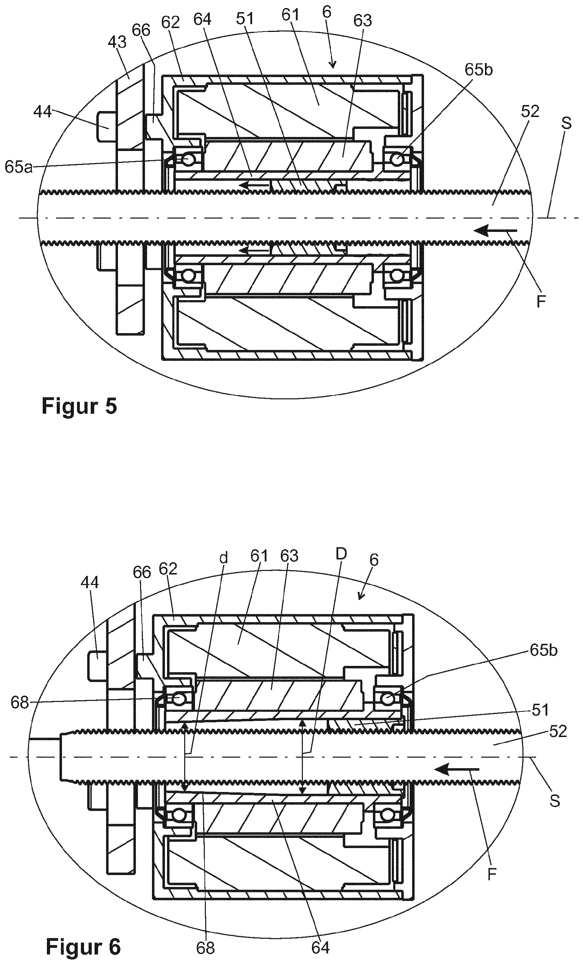

Erfindungsgemäß ist die Rotorwelle 64 als rohrförmige Hohlwelle ausgebildet, welche eine in Richtung der Spindelachse S durchgehende Durchgangsöffnung hat, die in dem in den Figuren 4 und 5 dargestellten Beispiel kreisrund mit einem Innendurchmesser D ist.

Die Spindelmutter 51 ist im dargestellten Beispiel außen zylindrisch ausgebildet und so bemessen, dass sie in axialer Richtung in die Rotorwelle 64 unter Bildung einer Presspassung zur Erzeugung der in Figur 4 dargestellten Anordnung eingepresst werden kann. Die Presspassung erzeugt eine kraft- bzw. reibschlüssige Verbindung zwischen der Innenfläche der Durchgangsöffnung der Rotorwelle 64 und der in radialer Richtung dagegen reibschlüssig anliegenden Außenfläche der Spindelmutter 51. In dieser dargestellten Ausführungsform ist die Spindelmutter 51 im hinteren, dem Fahrer zugewandten Endbereich der Durchgangsöffnung angeordnet.

In einer nicht dargestellten Ausführungsform ist die Spindelmutter in Richtung der Spindelachse S mittig in der Rotorwelle angeordnet.

Die reibschlüssige Verbindung bildet zum einen eine Rotations- oder Drehverbindung, die zur Übertragung des Motormoments von der Rotorwelle 64 auf die Spindelmutter 51 dient, die folglich direkt mit der Motordrehzahl angetrieben wird. Zum anderen wirkt sie als Translations- oder Längsverbindung, über welche die Verstellkraft von der Gewindespindel 52 über die Spindelmutter 51 in Richtung der Spindelachse S übertragen wird.

Die Spindelmutter 51 ist koaxial zur Spindelachse S, und dabei - wie im Beispiel gezeigt bevorzugt vollständig - innerhalb der Rotorwelle 64 angeordnet.

Die in die Spindelmutter 51 eingreifende Gewindespindel 52 erstreckt sich ebenfalls koaxial zur Spindelachse S, wobei sie in jedem möglichen Verstellzustand zumindest teilweise in die Durchgangsöffnung eintaucht, und damit innerhalb der Rotorwelle 64 angeordnet ist.

Das Statorgehäuse 62 weist Befestigungsmittel 66 auf, beispielsweise einen Flansch oder zapfenartige Vorsprünge, die mit einer fest an dem äußeren Mantelrohr 40 angebrachten Stützkonsole 43 verbunden sind, beispielsweise mittels Schrauben 44 oder anderen Befestigungsmitteln. Dadurch ist der Antriebsmotor 6 an dem Mantelrohr 40 fixiert und in Richtung der Spindelachse S abgestützt.

Zur Längsverstellung des inneren Mantelrohrs 31 der Lenksäule 1 kann der Rotor 63 durch eine geeignete elektrische Ansteuerung relativ zum Stator 61 um die Spindelachse S drehend angetrieben werden. Dadurch wird die koaxial in der Rotorwelle 64 drehfest angebrachte Spindelmutter 51 direkt mit der Drehzahl des Rotors 63 relativ zur feststehenden Gewindespindel 52 drehend angetrieben. Je nach Drehrichtung des Antriebs 6 wird die Gewindespindel 52 in Richtung der Spindelachse S translatorisch relativ zur Spindelmutter 51 verlagert, so dass entsprechend das mit der Gewindespindel 52 verbundene innere Mantelrohr 31 relativ zu dem den Antriebsmotor 6 abstützenden Mantelrohr 40 teleskopierend in Richtung der Längsachse L verstellt wird.

Durch die beschriebene Anordnung der Spindelmutter 51 in der Rotorwelle 64 ist in der in Figur 4 gezeigten Ausführung eine Energieabsorptionseinrichtung in einer ersten Ausführung realisiert. Im Crashfall, beispielsweise bei einem Frontalzusammenstoß, wird durch einen auf das Lenkrad aufprallenden Körper eine hohe Kraft F in Richtung der Längsachse L über die Lenkspindel 32 in das innere Mantelrohr 31 eingeleitet, und über das Übertragungselement 34 auf die Gewindespindel 52 übertragen. Dies Kraft F, auch als Crashkraft bezeichnet, wird in Richtung der Spindelachse S über die Spindelmutter 51 in die Rotorwelle 64 geleitet, und schließlich über die Lager 65a, b und das Statorgehäuse 62 an der Stützkonsole 43 an dem äußeren Mantelrohr 40 abgefangen. Folglich wirkt die Crashkraft F, wie in Figur 4 eingezeichnet, in axialer Richtung auf die Verbindung zwischen der Spindelmutter 51 und der Rotorwelle 64.

Wenn die Crashkraft F so groß ist, dass die Grenzkraft der axialen Haltewirkung, dies ist die Haltekraft des Reibschlusses der Presspassung, überschritten wird, wird die Spindelmutter 51, relativ zur Rotorwelle 64 in Richtung der Spindelachse S verschoben, wie in Figur 5 durch die darin von rechts einwirkende Crashkraft F mit den Pfeilen angedeutet. Durch die bei der Relativbewegung zwischen der Außenseite der Spindelmutter 51 und der Rotorwelle 64 auftretende Reibung wird die kinetische Crash-Energie absorbiert.

Der Crashweg, dies ist der Weg in Richtung der Spindelachse S, entlang dessen im Crashfall durch die Relativbewegung von Spindelmutter 51 und Rotorwelle 64 kinetische Energie abgebaut werden kann, kann sich über die Länge der Rotorwelle 64 erstrecken.

Die in Figur 4 dargestellte Ausführung der Rotorwelle 64 hat einen über ihre Länge konstanten Innendurchmesser D. Dadurch, dass der Innendurchmesser D am Sitz der Spindelmutter 51 im normalen Betriebszustand gleich groß ist wie im Verlauf des gesamten Crashwegs, erfolgt die Energieabsorption im Wesentlichen durch Reibung.

Eine Weiterbildung der Energieabsorptionseinrichtung ist in Figur 6 gezeigt. Der Unterschied zu der ist in Figur 4 gezeigten Ausführung ist, dass der Innendurchmesser D am Sitz der Spindelmutter 51 im normalen Betriebszustand sich in Richtung des Crashwegs, in den Figuren 4, 5 und 6 von rechts nach links, durch nach innen vorstehende Deformationselemente 68 verengt. Dies kann beispielsweise durch eine konisch bis auf den Deformations-Innendurchmesser d verjüngte Durchgangsöffnung realisiert werden, der kleiner ist als der anfängliche Durchmesser D. Dadurch wird die Energieabsorption auf unterschiedliche Weise beeinflusst: Zum einen erhöht sich die Reibung beim Einpressen der Spindelmutter 51 zwischen die Deformationselemente 68, so dass die Energieabsorption durch Reibung ansteigt. Zum anderen deformieren die Energieabsorptionselemente 68 die Spindelmutter 51, so dass zusätzlich Verformungsarbeit geleistet wird, wodurch das Energieabsorptionsvermögen zusätzlich erhöht wird.

Durch fertigungstechnisch mit geringem Aufwand umsetzbare Maßnahmen, beispielsweise die Ausgestaltung der Kontaktflächen des Kraftschlusses, der Maßverhältnisse der Presspassung, der Formgebung der Energieabsorptionselemente 68, der Materialpaarungen zwischen Rotorwelle 64 und Spindelmutter 51, und Kombinationen davon, können flexibel vielfältige Energieabsorptionscharakteristiken realisiert werden. Beispielsweise können die Gewindespindel 52 und die Rotorwelle 64 aus Stahl gefertigt sein, und die Spindelmutter 51 aus Kunststoff oder Buntmetall. Durch Auswahl der Materialpaarung kann das Reib- und Deformationsverhalten beim Durchgang der Spindelmutter 51 durch die Rotorwelle 64 im Crashfall beeinflusst und dadurch die Energieabsorptionscharakteristik vorgegeben werden.

Die Lager 65a und 65b sind gleichartig aufgebaut, und zwar als Schrägkugellager, die jeweils einen auf der Rotorwelle 64 fest angebrachten Lagerinnenring 651, einen im Statorgehäuse fest eingesetzten Lageraußenring 652 und dazwischen als Wälzkörper abrollbar angeordnete Kugeln 653 aufweisen. Die Lager 65a und 65b sind in Richtung der Spindelachse S aufeinander zu vorgespannt. Die Verlängerungen der gedachten Verbindungslinien durch die Kugel-Kontaktflächen (Druckpunkte) mit den Lagerinnen- und Lageraußenringen 651, 652 der beiden Lager 65a und 65b sind schematisch gestrichelt eingezeichnet und mit dem Bezugszeichen X versehen, Sie schneiden sich X-förmig auf der Spindelachse S im Bereich der Hohlwelle 64 zwischen den Lagern 65a und 65b, wodurch eine sogenannte "X-Lagerung realisiert ist.

Mit dem Bezugszeichen 7 ist ein nur schematisch angedeuteter zweiter Verstellantrieb bezeichnet, der zwischen der Trageinheit 2 und der Manteleinheit 4 in Höhenrichtung H angreift, beispielsweise über den Stellhebel 41. Der Stellantrieb 7 kann als Spindeltrieb in einer aus dem Stand der Technik bekannten Bauform als Tauch- oder Rotationsspindelantrieb ausgebildet sein, oder auch gemäß der vorliegenden Erfindung, je nach zur Verfügung stehendem Bauraum im Kraftfahrzeug.

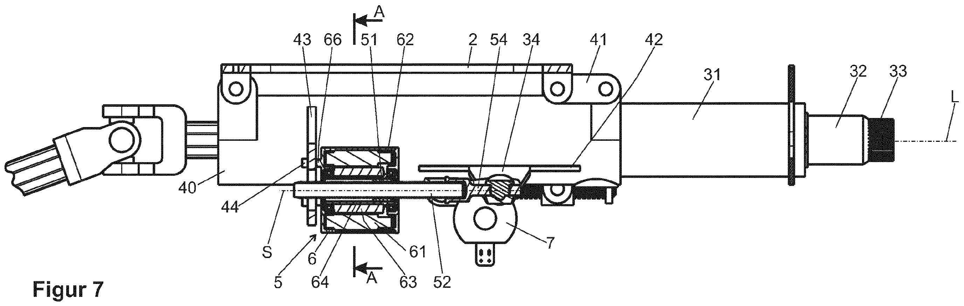

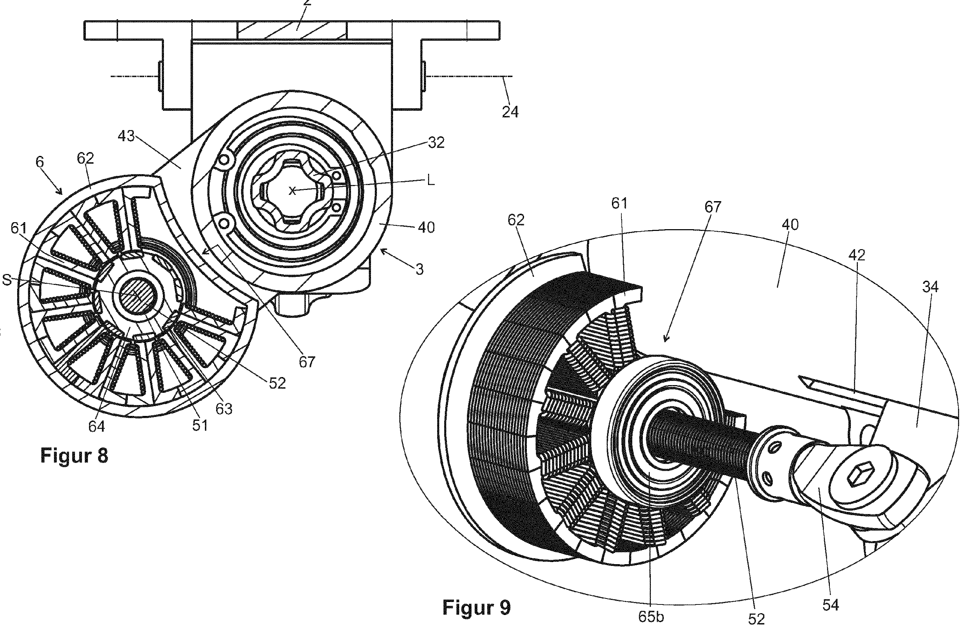

Eine dritte Ausführungsform ist in den Figuren 7 bis 9 dargestellt, wobei die Lenksäule 1 der Figuren 7 bis 9 einen gleichen Aufbau aufweist, wie die Lenksäule aus den Figuren 1 bis 5, wobei der Unterschied in der platzsparenden und kompakten Konfiguration des Verstellantriebs 5 liegt, der in der Querschnittansicht von Figur 8, die einen Schnitt A-A aus Figur 7 zeigt, sowie der schematischen Perspektivansicht von Figur 8 erkennbar ist, in der das Statorgehäuse 62 zur besseren Übersicht weggelassen ist. Eine Besonderheit des darin dargestellten Antriebsmotors 6 gegenüber des in den Figuren 1 bis 5 dargestellten Antriebsmotors 6 ist der asymmetrisch geformte Stator 61, der auf seinem der Manteleinheit 4 bzw. der Längsachse L zugewandten Umfang eine radiale Einformung 67 aufweist, die es ermöglicht, einen relativ großen Statordurchmesser für ein hohes Motormoment vorzugeben, und dennoch den Abstand zwischen Spindelachse S und Längsachse L zur Realisierung einer kompakten Bauform relativ gering zu halten. Die Einformung 67 ist dadurch realisiert, dass der Stator 6 eine kreissegmentförmige Aussparung im Querschnittsprofil aufweist. Bis auf die Ausbildung des Stators 61 ist der weitere Aufbau des Verstellantriebs 5 identisch mit dem der Figuren 1 bis 5, so dass ein Spindeltrieb mit einer Gewindespindel 52, die in die Spindelmutter 51 eingreift, die mit der Rotorwelle 64 eines einen Rotor 63 und einen Stator 62 aufweisenden Antriebsmotors 6 um die Spindelachse S relativ zur Gewindespindel 52 drehend antreibbar gekuppelt ist, wobei erfindungsgemäß die Rotorwelle 64 des Antriebsmotors 6 als koaxial zur Spindelachse S angeordnete Hohlwelle 64 ausgebildet ist, in der koaxial die Gewindespindel 51 angeordnet ist. Der in den Figuren 7 bis 9 dargestellte Antriebsmotor 6 lässt sich bevorzugt mittels einer pulsweitenmodellierten Ansteuerung besonders gleichmäßig betreiben.

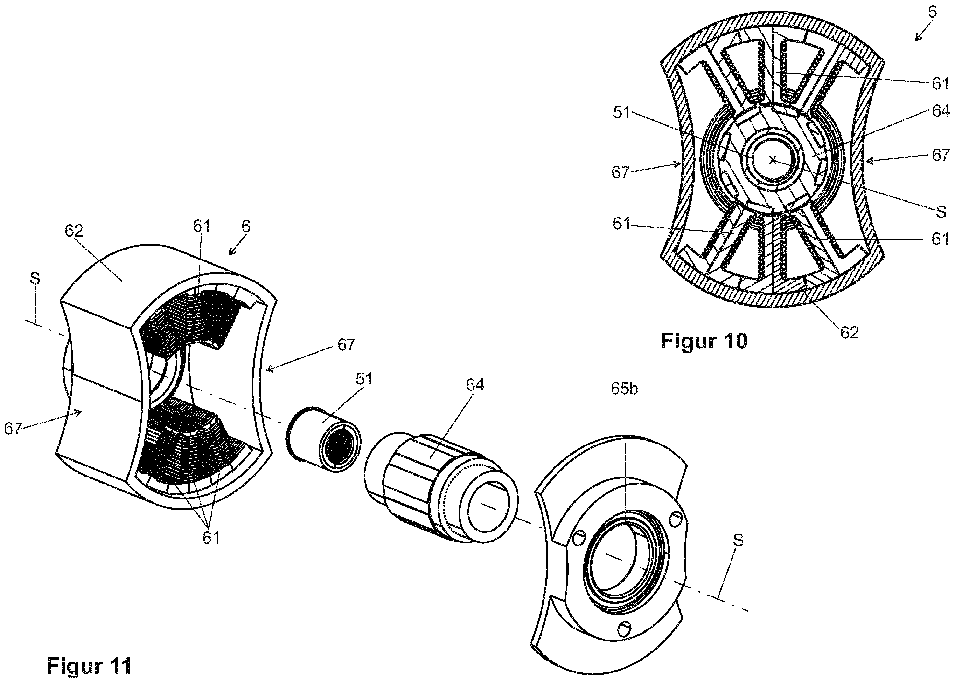

In Figur 10 ist in einer Querschnittsansicht wie in Figur 8, und in Figur 11 in einer in Richtung der Spindelachse S auseinander gezogenen Explosionsdarstellung ein Antriebsmotor 6 in einer zweiten Ausführungsform separat dargestellt, wobei die Stelleinheit zur besseren Übersicht weggelassen ist. Dabei sind die einzelnen Teile mit übereinstimmender Funktion mit denselben Bezugszeichen versehen.

In Weiterbildung der ersten Ausführung weist der Antriebsmotor 6 zwei radiale Einformungen 67 auf, die einander bezüglich der Spindelachse S gegenüberliegend in den Umfang des Statorgehäuses 62 eingeformt sind. Wie in der ersten Ausführung bilden sie kreissegmentförmige Aussparungen im Querschnittsprofil. Die Einformungen 67 können jeweils wie dargestellt denselben Querschnitt haben und symmetrisch bezüglich der Spindelachse S angeordnet sein. Dadurch kann die Laufruhe verbessert werden. Es sind darüber hinaus asymmetrische Anordnungen sowie zusätzlich oder alternativ unterschiedliche Querschnitte der Einformungen 67, und/oder zusätzliche Einformungen 67 denkbar. Dadurch können die Laufeigenschaften angepasst oder spezielle Einbausituationen berücksichtigt werden.

### Bezugszeichenliste

- 1: Lenksäule
- 2: Trageinheit
- 21: Befestigungsmittel
- 22, 23: Schwenklager
- 24: Schwenkachse
- 3: Stelleinheit
- 31: Innenmantel / inneres Mantelrohr
- 32: Lenkspindel
- 33: Befestigungsabschnitt
- 34: Übertragungselement
- 35: Gabel
- 4: Manteleinheit
- 40: Außenmantel / äußeres Mantelrohr
- 41: Stellhebel
- 42: Durchgangsöffnung
- 43: Stützkonsole
- 44: Schrauben
- 5: Verstellantrieb
- 51: Spindelmutter
- 52: Gewindespindel
- 54: Befestigungselement
- 6: Antriebsmotor
- 61: Stator
- 62: Statorgehäuse
- 63: Rotor
- 64: Rotorwelle
- 65a,b: Wälzlager
- 651: Lagerinnenring
- 652: Lageraußenring
- 653: Kugel
- 66: Befestigungsmittel
- 67: Einformung
- 68: Deformationselement
- 7: Verstellantrieb
- L: Längsachse
- H: Höhenrichtung
- S: Spindelachse
- V: Verstellung
- D, d: Innendurchmesser

## Patentansprüche

1. Verstellantrieb (5) für eine motorisch verstellbare Lenksäule (1) für ein Kraftfahrzeug, umfassend einen Spindeltrieb mit einer Gewindespindel (52), die in eine Spindelmutter (51) eingreift, die mit der Rotorwelle (64) eines einen Rotor (63) und einen Stator (62) aufweisenden Antriebsmotors (6) um die Spindelachse (S) relativ zur Gewindespindel (52) drehend antreibbar gekuppelt ist,
**dadurch gekennzeichnet,**
**dass** die Rotorwelle (64) des Antriebsmotors (6) als koaxial zur Spindelachse (S) angeordnete Hohlwelle (64) ausgebildet ist, in der koaxial die Gewindespindel (51) angeordnet ist.

2. Verstellantrieb (5) nach Anspruch 1, **dadurch gekennzeichnet, dass** die Spindelmutter (51) in der Hohlwelle (64) aufgenommen ist.

3. Verstellantrieb (5) nach einem der vorangehenden Ansprüche, **dadurch gekennzeichnet, dass** die Spindelmutter (51) eine kraftschlüssige und/oder formschlüssige und/oder stoffschlüssige Verbindung mit der Hohlwelle (64) aufweist.

4. Verstellantrieb (5) nach Anspruch 3, **dadurch gekennzeichnet, dass** die Verbindung zumindest auf einem Teilabschnitt des Außenumfangs der Spindelmutter (51) ausgebildet ist.

5. Verstellantrieb (5) nach Anspruch 3 oder 4, **dadurch gekennzeichnet, dass** die Verbindung beim Überschreiten einer vorgegebenen, in Richtung der Spindelachse (S) auf die Spindelmutter (51) relativ zur Hohlwelle (64) wirkenden Grenzkraft losbrechbar ausgestaltet ist.

6. Verstellantrieb (5) nach einem der vorangehenden Ansprüche, **dadurch gekennzeichnet, dass** zwischen der Spindelmutter (51) und der Hohlwelle (64) eine Energieabsorptionseinrichtung ausgebildet ist.

7. Verstellantrieb (5) nach Anspruch 6, **dadurch gekennzeichnet, dass** die Energieabsorptionseinrichtung eine mit der Spindelmutter (51) und der Hohlwelle (64) zusammenwirkende Friktionseinrichtung und/oder Deformationseinrichtung (68) aufweist.

8. Verstellantrieb (5) nach Anspruch 7, **dadurch gekennzeichnet, dass** die Deformationseinrichtung mindestens ein Deformationselement (68) aufweist, welches in der Durchgangsöffnung der Hohlwelle (64) angeordnet ist und von dem die Spindelmutter (51) bei einer axialen Bewegung relativ zur Hohlwelle (64) plastisch deformierbar ist.

9. Verstellantrieb (5) nach einem der vorangehenden Ansprüche, **dadurch gekennzeichnet, dass** die Spindelmutter (51) aus einem weicheren Material als die Hohlwelle (64) ausgebildet ist.

10. Verstellantrieb (5) nach einem der vorangehenden Ansprüche, **dadurch gekennzeichnet, dass** der Antriebsmotor (6) ein Motorgehäuse (62) aufweist, in dem die Hohlwelle (64) gelagert ist.

11. Verstellantrieb (5) nach Anspruch 10, **dadurch gekennzeichnet, dass** die Hohlwelle (64) mindestens zwei axial beabstandete Lager (65a, 65b) aufweist.

12. Verstellantrieb (5) nach einem der vorangehenden Ansprüche, **dadurch gekennzeichnet, dass** der Antriebsmotor (6) als Servomotor ausgebildet ist.

13. Motorisch verstellbare Lenksäule (1) für ein Kraftfahrzeug, umfassend einen Verstellantrieb (6) nach einem der Ansprüche 1 bis 10, dessen Spindeltrieb zwischen einer mit der Karosserie verbindbaren Trageinheit (2) und einer eine Lenkspindel (32) drehbar aufnehmenden Manteleinheit (4) und/oder zwischen axial relativ zueinander teleskopartig verstellbaren, die Lenkspindel (32) lagernden Mantelrohren (31, 40) einer Manteleinheit (4) angeordnet ist.

## Claims

1. An adjustment drive (5) for a motor-adjustable steering column (1) for a motor vehicle, comprising a spindle drive having a threaded spindle (52) which engages in a spindle nut (51) which, so as to be able to be driven in a rotating manner about the spindle axis (S) relative to the threaded spindle (52), is coupled to the rotor shaft (64) of a drive motor (6) which has a rotor (63) and a stator (62),
**characterized in that**
the rotor shaft (64) of the drive motor (6) is configured as a hollow shaft (64) which is disposed so as to be coaxial with the spindle axis (S) and in which the threaded spindle (51) is coaxially disposed.

2. The adjustment drive (5) as claimed in claim 1, **characterized in that** the spindle nut (51) is received in the hollow shaft (64).

3. The adjustment drive (5) as claimed in one of the preceding claims, **characterized in that** the spindle nut (51) has a force-fitting and/or form-fitting and/or a substance-to-substance connection to the hollow shaft (64).

4. The adjustment drive (5) as claimed in claim 3, **characterized in that** the connection is configured at least on a sub-portion of the external circumference of the spindle nut (51).

5. The adjustment drive (5) as claimed in claim 3 or 4, **characterized in that** the connection is designed so as to be releasable by breaking when exceeding a predefined limit force which in the direction of the spindle axis (S) acts on the spindle nut (51) relative to the hollow shaft (64).

6. The adjustment drive (5) as claimed in one of the preceding claims, **characterized in that** an energy absorbing installation is configured between the spindle nut (51) and the hollow shaft (64).

7. The adjustment drive (5) as claimed in claim 6, **characterized in that** the energy absorbing installation has a friction installation and/or a deformation installation (68) which interact/interacts with the spindle nut (51) and the hollow shaft (64).

8. The adjustment drive (5) as claimed in claim 7, **characterized in that** the deformation installation has at least one deformation element (68) which is disposed in the passage opening of the hollow shaft (64) and by which the spindle nut (51) in an axial movement relative to the hollow shaft (64) is plastically deformable.

9. The adjustment drive (5) as claimed in one of the preceding claims, **characterized in that** the spindle nut (51) is configured from a softer material than the hollow shaft (64).

10. The adjustment drive (5) as claimed in one of the preceding claims, **characterized in that** the drive motor (6) has a motor housing (62) in which the hollow shaft (64) is mounted.

11. The adjustment drive (5) as claimed in claim 10, **characterized in that** the hollow shaft (64) has at least two axially spaced-apart bearings (65a, 65b).

12. The adjustment drive (5) as claimed in one of the preceding claims, **characterized in that** the drive motor (6) is configured as a servomotor.

13. A motor-adjustable steering column (1) for a motor vehicle, comprising an adjustment drive (6) as claimed in one of claims 1 to 10, the spindle drive of said adjustment drive (6) being disposed between a support unit (2) that is able to be connected to the bodywork and a casing unit (4) that rotatably receives a steering spindle (32), and/or between casing tubes (31, 40) of a casing unit (4) that are mutually adjustable in a telescopic axial manner and mount the steering spindle (32).

## Revendications

1. Entraînement de réglage (5) pour une colonne de direction (1) réglable par moteur pour un véhicule automobile, comprenant un mécanisme à broche muni d'une broche filetée (52), qui s'egage dans un écrou de broche (51) qui est couplé à l'arbre de rotor (64) d'un moteur d'entraînement (6) présentant un rotor (63) et un stator (62) de manière à pouvoir être entraîné en rotation autour de l'axe de broche (S) par rapport à la broche filetée (52),
**caractérisé en ce que**
l'arbre de rotor (64) du moteur d'entraînement (6) est réalisé sous forme d'arbre creux (64) agencé coaxialement à l'axe de broche (S), dans lequel est agencée coaxialement la broche filetée (51).

2. Entraînement de réglage (5) selon la revendication 1, **caractérisé en ce que** l'écrou de broche (51) est reçu dans l'arbre creux (64).

3. Entraînement de réglage (5) selon l'une quelconque des revendications précédentes, **caractérisé en ce que** l'écrou de broche (51) présente une liaison à force et/ou par la forme et/ou par la matière avec l'arbre creux (64).

4. Entraînement de réglage (5) selon la revendication 3, **caractérisé en ce que** la liaison est formée au moins sur une section partielle de la périphérie extérieure de l'écrou de broche (51).

5. Entraînement de réglage (5) selon la revendication 3 ou 4, **caractérisé en ce que** la liaison est réalisée de manière à pouvoir être rompue en cas de dépassement d'une force limite prédéfinie agissant sur l'écrou de broche (51) dans la direction de l'axe de broche (S) par rapport à l'arbre creux (64).

6. Entraînement de réglage (5) selon l'une quelconque des revendications précédentes, **caractérisé en ce qu'**un dispositif d'absorption d'énergie est formé entre l'écrou de broche (51) et l'arbre creux (64).

7. Entraînement de réglage (5) selon la revendication 6, **caractérisé en ce que** le dispositif d'absorption d'énergie présente un dispositif de friction et/ou un dispositif de déformation (68) coopérant avec l'écrou de broche (51) et l'arbre creux (64).

8. Entraînement de réglage (5) selon la revendication 7, **caractérisé en ce que** le dispositif de déformation présente au moins un élément de déformation (68), qui est agencé dans l'ouverture de passage de l'arbre creux (64) et par lequel l'écrou de broche (51) peut être déformé plastiquement lors d'un mouvement axial par rapport à l'arbre creux (64).

9. Entraînement de réglage (5) selon l'une quelconque des revendications précédentes, **caractérisé en ce que** l'écrou de broche (51) est réalisé dans un matériau plus souple que l'arbre creux (64).

10. Entraînement de réglage (5) selon l'une quelconque des revendications précédentes, **caractérisé en ce que** le moteur d'entraînement (6) présente un carter de moteur (62) dans lequel est monté l'arbre creux (64).

11. Entraînement de réglage (5) selon la revendication 10, **caractérisé en ce que** l'arbre creux (64) présente au moins deux paliers (65a, 65b) espacés axialement.

12. Entraînement de réglage (5) selon l'une quelconque des revendications précédentes, **caractérisé en ce que** le moteur d'entraînement (6) est réalisé sous forme de servomoteur.

13. Colonne de direction (1) réglable par moteur pour un véhicule automobile, comprenant un entraînement de réglage (6) selon l'une quelconque des revendications 1 à 10, dont le mécanisme à broche est agencé entre une unité de support (2) pouvant être reliée à la carrosserie et une unité d'enveloppe (4) recevant de manière rotative une broche de direction (32) et/ou entre des tubes d'enveloppe (31, 40) d'une unité d'enveloppe (4), réglables axialement l'un par rapport à l'autre de manière télescopique, supportant la broche de direction (32).
